# FASCICULE DE BREVET EUROPEEN

(11) **EP 2 238 191 B1**
(45) Date de publication et mention de la délivrance du brevet: **15.05.2019**
(21) Numéro de dépôt: 09706132.9
(22) Date de dépôt: 22.01.2009
(51) Int. Cl.: C08G 18/42, C08G 18/63

(54) **MOUSSES DE POLYURETHANNE**
POLYURETHANSCHAUMSTOFFE
POLYURETHANE FOAMS

(30) Priorité: 01.02.2008 FR 0800551
(43) Date de publication de la demande: 13.10.2010
(73) Titulaire: Rhodia Opérations, 93306 Aubervilliers (FR)
(72) Inventeur: MASTEAU, Jean-Claude, F-69008 Lyon (FR); RODRIGUES, Edson Leme, 13632-460 Pirassununga (SP) (BR)
(74) Mandataire: Schuck, Alexander
(86) Numéro de dépôt international: PCT/EP2009/050689
(87) Numéro de publication internationale: WO 2009/095348

(56) Documents cités:
- EP-A- 0 271 789
- EP-A- 0 687 663
- WO-A-2007/141404
- FR-A- 2 858 622

## Description

La présente invention concerne des mousses de polyuréthanne préparées à partir de polyesterpolyols obtenus par polymérisation de monomères diols et de monomères diacides, ces derniers étant synthétisés à partir d'un mélange de composés dinitriles obtenus comme sous-produits dans la fabrication de l'adiponitrile par hydrocyanation du butadiène.

Les mousses en polyuréthanne sont utilisées dans de nombreuses applications. On peut citer, à titre d'exemple, la fabrication de semelles pour chaussures, ainsi que des semelles internes ou « mid-sole ».

Selon les applications de ces mousses, elles doivent présenter des propriétés déterminées qui demandent l'utilisation de matières premières particulières pour la synthèse des polyesterpolyols et polyisocyantes. Ainsi, les mousses polyuréthannes utilisées notamment dans le domaine de la chaussure sont souvent obtenues en utilisant comme produits de base des polyesterpolyols synthétisés à partir de monomères diols tels que le glycol, le diéthylène glycol et de monomères diacides tels que l'acide adipique. Pour d'autres usages, il est également possible d'utiliser des polyesterpolyols obtenus à partir de monomères diacides constitués par un mélange de diacides, à savoir l'acide adipique, l'acide glutarique et l'acide succinique. Ce mélange de diacides est un sous-produit obtenus dans les procédés de fabrication de l'acide adipique par oxydation du cyclohexane.

Il existe toujours un besoin de trouver de nouveaux composés ou produits pour fabriquer des polyuréthannes et notamment des mousses polyuréthannes pour obtenir des mousses avec de nouvelles propriétés et/ou élargir la liste des matières premières susceptibles de produire des mousses polyuréthannes avec des propriétés convenables pour les applications connues.

La fabrication de l'adiponitrile, un grand intermédiaire chimique utilisé notamment dans la synthèse de l'hexaméthylène diamine et du caprolactame (monomères pour la fabrication des polyamides), par hydrocyanation du butadiène génère un flux de sous-produits dinitriles comprenant majoritairement des composés dinitriles ramifiés comme le méthyl-2 glutaronitrile, l'éthyl-succinonitrile. Ce mélange de composés dinitriles ramifiés est obtenu par distillation pour le séparer de l'adiponitrile. Comme la séparation ne peut être complète, le mélange de composés dinitriles ramifiés comprend également une faible proportion d'adiponitrile.

Plusieurs solutions ont été proposées pour valoriser ces sous-produits ou mélanges. Une de celles-ci consiste à hydrogéner les composés dinitriles en amines primaires notamment pour produire de la méthylpentaméthylènediamine (MPMD), utilisée comme monomère pour la fabrication de polyamides particuliers. Ce procédé requiert des étapes de purification soit du méthyl-glutaronitrile soit de la méthylpentaméthylènediamine.

Dans l'industrie, ces sous-produits sont également valorisés sous forme de vapeur ou d'énergie par combustion. Toutefois, cette combustion peut demander un traitement des gaz pour éliminer les oxydes d'azote produits et produit du gaz carbonique qui est rejeté dans l'atmosphère.

Il existe donc un besoin et une demande importante de trouver de nouvelles voies de valorisation et transformation de ces composés dinitriles ou des mélanges en composés chimiques valorisables et économiquement intéressants.

Sauf mention contraire, les pourcentages et parties donnés dans le texte ci-après sont exprimés en poids.

Un des buts de la présente invention est précisément de proposer une mousse polyuréthanne préparée à partir de polyesterpolyols obtenus avec des matières premières issues de la transformation du mélange de composés dinitriles ramifiés cités précedemment. Ces mousses polyuréthannes ont des propriétés comparables à celles des mousses polyuréthannes de l'art antérieur.

A cet effet, l'invention propose un procédé de préparation de mousse polyuréthanne obtenue par réaction entre :
a) au moins un polyisocyanate et
b) au moins un polyesterpolyol produit par polymérisation de monomères diols et de monomères diacides, les monomères diacides comprenant au moins un mélange de diacides appelé ci-après mélange M dont la composition pondérale est :

| | |
|---|---|
| acide méthyl-glutarique (MGA): | 80-95 % |
| acide éthyl-succinique (ESA) : | 0-10 % |
| acide adipique (AA) : | 5-15 %. |

L'invention vise également les mousses polyuréthannes ainsi préparées.

Dans le mélange de diacides utilisé comme monomères diacides, tout ou partie desdits diacides peut être sous forme d'anhydrides.

Les monomères diacides utilisés pour la synthèse du polyester polyol peuvent également comprendre d'autres diacides tels que l'acide adipique, les acides phtaliques, le mélange d'acides glutarique/succinique/adipique issu de la fabrication de l'acide adipique ou analogues.

Selon l'invention le mélange M ci-dessus est obtenu par transformation d'un mélange de composés dinitriles appelé ci-après mélange N, en acide par hydrolyse des fonctions nitriles. Ce mélange N de composés dinitriles est avantageusement le mélange de composés dinitriles ramifiés séparés et récupérés dans le procédé de fabrication de l'adiponitrile par double hydrocyanation du butadiène.

Ainsi, a titre d'exemple, ce mélange N comprend :

| | |
|---|---|
| Méthyl-2-glutaronitrile (MGN) : | de 80 à 85 % |
| Ethyl-succinonitrile (ESN) : | de 8 à 12 % |
| Adiponitrile (AdN) : | de 3 à 5 % |

Le complément à 100% correspond à différentes impuretés.

Le mélange de diacides est préparé par transformation des composés constituant le mélange N de dinitriles. Cette transformation peut être réalisée par plusieurs procédés. A titre d'exemple, deux procédés sont décrits brièvement ci-après.

Selon un premier procédé, la transformation des fonctions nitriles en fonctions carboxyliques est obtenue par réaction des composés nitriles avec un composé basique hydroxyle en solution dans un solvant à une température comprise entre 80 et 200°C, de préférence entre 80 et 150°C. L'ammoniac formé est éliminé. Le sel obtenu est mis en réaction avec un acide minéral, les diacides formés sont isolés et récupérés. Un tel procédé est, par exemple décrit dans la demande française n° 2 902 095. Le composé basique hydroxyle est un hydroxyde d'alcalin tel que la soude, la potasse ou analogue. Avantageusement une solution aqueuse de ce composé basique hydroxyle est utilisée. La concentration en composés basiques dans la solution aqueuse est avantageusement comprise entre 5 et 30 % en poids. Le composé basique hydroxyle est mis en oeuvre avec un excès de 3 à 20%, avantageusement entre 3 et 10% par rapport à la quantité stoechiométrique nécessaire pour transformer les fonctions nitriles en fonction carboxyliques. La réaction est mise en oeuvre soit sous pression atmosphérique à, avantageusement, une température permettant d'avoir un reflux du solvant, par exemple de l'eau, soit sous pression avec élimination de l'ammoniac formé ou sans élimination de cet ammoniac formé qui se solubilisera au moins partiellement dans le milieu réactionnel. Comme acide minéral convenable, on peut citer l'acide sulfurique, l'acide chlorhydrique, les acides organiques présentant un pKa inférieur ou égal à 3, ou leurs mélanges.

On peut obtenir également les diacides carboxyliques constituant le mélange M selon un autre procédé de transformation des fonctions nitriles en fonctions acides. Ce procédé consiste à hydrater les fonctions nitriles des composés formant le mélange N pour former des composés amide et d'hydrolyser les fonctions amides en fonctions carboxyliques comme décrit dans la demande de brevet français, non publiée, n°06 10302 déposée le 24 novembre 2006.

Brièvement, selon ce procédé, le mélange M de diacides est préparé par :
a) hydratation d'un mélange N correspondant comportant du méthyl-glutaronitrile (MGN), de l'éthyl-succinonitrile (ESN) et de l'adiponitrile (AdN), en fonction amide, et
b) hydrolyse des fonctions amides en fonctions carboxyliques.

L'étape d'hydratation est réalisée par réaction avec l'eau en présence d'un acide fort minéral, en utilisant de 1 à 1,5 mole d'eau par mole de fonction nitrile à hydrater en présence d'un acide fort minéral à une température permettant de maintenir le milieu réactionnel à l'état liquide. L'étape d'hydrolyse est réalisée, sous agitation, en utilisant de 1 à 10 mole d'eau par mole de fonction amide à hydrolyser et une quantité d'acide fort minéral exprimée en proton et correspondant à au moins 1 mole de proton par mole d'amide à hydrolyser, la température du milieu réactionnel étant déterminée pour maintenir le milieu réactionnel à l'état liquide. Le diacide carboxylique formé est récupéré par maintien du milieu réactionnel, sans agitation, à une température supérieure à la température de fusion du diacide carboxylique et/ou du sel formé pour décantation du milieu réactionnel, la phase supérieure contenant l'acide carboxylique étant séparée.

Les diacides carboxyliques ainsi obtenus par ces différents procédés sont avantageusement purifiés par les techniques habituelles, à savoir, cristallisation, distillation, raffinage ou analogue.

Il est également possible de traiter ce mélange de diacides par des procédés permettant de séparer certains diacides et donc de modifier la composition pondérale du mélange obtenu par les procédés de transformation des composés dinitriles décrits ci-dessus. Ainsi, un procédé de séparation des diacides décrit dans le brevet européen 0687663 peut être utilisé. Il consiste à transformer les diacides sous forme anhydride puis de séparer les anhydrides par distillation. Par la mise en oeuvre de ce procédé, il est possible de séparer notamment l'anhydride de l'acide éthyl-succinnique et/ou l'anhydride de l'acide adipique et de récupérer un mélange comprenant une concentration élevée en anhydride de l'acide méthyl-glutarique. Ce mélange peut être utilisé tel quel ou après reformation de la forme acide.

Les polyesters polyols sont obtenus, par exemple, selon un procédé de fabrication comprenant deux étapes, une première étape d'estérification et une seconde de polycondensation.

L'étape d'estérification est réalisée en mélangeant les diacides du mélange M avec des polyols , de préférence des diols et/ou des polyétherdiols comme, par exemple, un mélange d'éthylène glycol et diéthylène glycol avec un rapport molaire diol/diacide compris entre 1,2 et 1,5.
Les diols convenables sont choisis dans le groupe comprenant : l'éthylène glycol, le 1,4-butanediol, le 1,5-pentanediol, le 1,6-hexanediol, le 1,10-décanediol, le 2,2-diméthyl-1,3-propanediol, le 1,3-propanediol, triméthylpropanol, le Bisphenol , les polyetherdiol étant choisis dans le groupe comprenant le diéthylène glycol, le dipropylène glycol et l'1,1,3-triméthyl-triéthylènediol

La température de réaction dans cette première étape est augmentée progressivement au cours de l'avancement de la réaction. A titre d'exemple, le début de la réaction est mis en oeuvre à une température de 160 °C pour arriver à une température de 220°C en fin de réaction.

La seconde étape de polycondensation est mise en oeuvre avec addition d'un catalyseur tel que le titanate de tétrabutyle (TBT) avec une concentration pondérale de 0,003% par rapport au poids de diacides engagés. La température de polymérisation est de 200 °C sous une pression comprise entre 10 et 20 mbar.

Le polyesterpolyol obtenu est caractérisé par l'indice d'hydroxyle (I_{OH}) correspondant au nombre de mg de potasse par gramme de polyol pour transformer les fonctions hydroxyles en alcoolate et l'indice d'acide (I_{A}) qui représente le nombre de mg de KOH nécessaire pour neutraliser 1 g de polyol.

Le polyesterpolyol est également caractérisé par la viscosité ainsi que par son poids moléculaire.

Avantageusement, un additif limitant ou empêchant l'hydrolyse des fonctions esters est ajouté dans les polyesters polyol, tels que des carboimides comme les cyanamides; l'hydrogène cyanamide ; les carbimides; les cyanogenamides; les amidocyanogenes.

Il peut être également avantageux d'ajouter dans les polyesters polyols, des additifs stabilisants contre les UV tels que les amines encombrées, des antioxydants, des agents ignifugeants ou analogues.

Pour modifier les propriétés mécaniques des mousses polyuréthanne, il peut être avantageux d'ajouter une charge minérale particulaire dispersée.

Comme charges particulaires minérales convenables, on peut citer à titre d'exemple, les charges présentant des particules de taille inférieure à 60 µm de préférence inférieure 20 µm et encore plus avantageusement inférieure à 10 µm.

Ainsi, on peut citer comme charges convenables, les poudres d'aluminosilicate, de silice notamment obtenue par précipitation, d'oxydes de titane, de talc, de kaolin ou de carbonate de calcium, par exemple.

Selon un mode de réalisation préféré, ces charges minérales sont présentes de manière dispersée, dans le polyesterpolyol avant la mise en réaction avec le polyisocyanate. Cette dispersion de la charge minérale peut être obtenue par addition de celle-ci dans le polyesterpolyol ou dans le milieu de polymérisation du polyesterpolyol. Il est également possible de disperser la charge minérale dans le monomère polyol avant l'addition dans le procédé de fabrication du polyesterpolyol. Encore plus avantageusement, la charge minérale peut être mélangée avec le mélange M de diacides avant l'alimentation dans le procédé de polymérisation.

La quantité de charge inorganique dans la suspension dans le polyol, le polyesterpolyol ou en mélange avec les diacides est choisie en fonction de la concentration en charge inorganique désirée dans la mousse polyuréthanne. Ainsi, des concentrations comprises entre 1 et 80% en poids de charge dans le mélange avec les diacides peuvent être utilisées.

Les polyuréthannes de l'invention sont obtenus selon les procédés classiques et usuels. Ainsi, les polyesters polyols de l'invention sont mélangés avec éventuellement un agent extenseur de chaîne et le polyisocyanate en présence d'un agent formateur de mousse ou porogène et un catalyseur.

Comme agent formateur de mousse, l'eau, les hydrocarbures, les chlorofluorocarbures, les fluorocarbures hydrogénés peuvent être utilisés seuls ou en mélange. L'eau est l'agent formateur de mousse ou porogène préféré.

Comme catalyseurs convenables pour l'invention on peut citer les amines tertiaires tels que la 1,4 diazabicyclo-(2, 2, 2)-octane N,N,N',N'-tétraméthylhéxaméthylinediamine; N,N,N',N'-tétraméthylpropylène diamine; N,N,N',N',N"-pentaméthyldiéthylénetriamine; triméthylaminoéthylpipérazine; N,N-diméthylcyclohexylamine; N,N-diméthylbenzylamine; N-méthylmorpholine; N - éthylmorpholine; triéthylamine; tributylamine; bis(diméthylaminoalkyl) pipérizines; N,N,N',N'-tétraméthyléthylènediamine; N, N,déthylbenzylamine, bis(N,N,diéthylaminoalkyl)adipate ; N,N,N',N' tétraméthyl-1,3 butanediamine; N,N,diméthyl-β-phényléthyldiamine, 1,2-diméthyl imidazole; 2-méthylimidazole et analogue. D'autres catalyseurs peuvent être utilisés tels que les composés organométalliques comme le dilaurate de dibutyl étain, oléate d'étain, le naphténate de cobalt, le naphténate de plomb.

D'autres additifs tels que des régulateurs de taille et forme des cellules, des pigments, des agents de coloration, des antioxydants peuvent être ajoutés.

Le mélange est injecté dans un moule pour former la mousse polyuréthanne et obtenir un article à la forme désirée tel que des semelles, par exemple.

En réglant la quantité d'agent formateur de mousse, par exemple la quantité d'eau, il est possible d'obtenir des mousses de différentes densités par exemple comprises entre 0,1 et 0,9 g/cm³, avantageusement comprise entre 0,2 et 0,5 g/cm³.

Les mousses polyuréthannes de l'invention permettent la réalisation d' articles présentant des propriétés convenables et similaires aux mousses polyuréthannes de l'art antérieur notamment celles obtenues avec des polyesterpolyols produits à partir de monomères diols et d'acide adipique. Ces propriétés sont illustrées dans les exemples suivants.

Parmi ces propriétés, la résistance à la traction déterminée selon la norme DIN 53543, l'allongement à la rupture mesurée selon les normes DIN 53543 et la résistance à la déchirure mesurée selon la norme ASTM D 3574-95 sont importantes.

D'autres propriétés sont également importantes pour certaines applications. Ainsi la résistance à l'abrasion est déterminée selon les normes DIN 53516. Le retrait au cours du moulage est mesuré selon la norme ASTMD 3851, la Déformation Permanente à la compression (DPC) selon la norme ASTM-D395 et la résilience selon la norme ASTM D1054.

Les avantages et détails de l'invention apparaîtront de façon plus détaillée au vu des exemples donnés ci-dessous à titre indicatif nullement limitatif.

### Préparation de diacides à partir d'un mélange N de dinitriles par hydrolyse basique :

Sur 560 g d'une solution aqueuse de soude à 15%, préalablement chauffée à 80°C, 108 g d'un mélange N de composés dinitriles provenant du procédé de fabrication d'adiponitrile par hydrocyanation du butadiène sont ajoutés sous agitation en 30 min.

Le mélange N de composés dinitriles a la composition pondérale suivante :

| | |
|---|---|
| Méthyl-glutaronitrile (MGN) : | 84,2 % |
| Ethyl-succinonitrile (ESN) : | 11 % |
| Adiponitrile (AdN) : | 4 % |

Le complément à 100% correspond à différentes impuretés.

Le mélange est ensuite chauffé pour obtenir un reflux et est maintenu à cette température pendant 7 h environ. L'ammoniac qui se dégage est récupéré et piégé. L'avancement de la réaction est contrôlé par dosage potentiométrique avec une solution d'acide chlorhydrique. Ce dosage permet de déterminer la quantité de soude restante, la quantité d'ammoniac dissous et la quantité de fonction carboxylique salifiée correspondant aux différents sauts de pH observés au cours du dosage. Le milieu réactionnel est ensuite refroidi à température ambiante et 80 g d'eau sont additionnées avant de couler 105 g d'acide sulfurique 98%. Le pH de la solution aqueuse est de l'ordre de 3.

La phase aqueuse est ensuite extraite avec 3 fois 200 ml de MTBE (méthyltertiobutyléther) à 40°C. Les phases organiques sont regroupées et le MTBE est ensuite distillé. 141,6 g de diacides sont obtenus avec une pureté déterminée par dosage potentiométrique de l'ordre de 98,5%.

Le mélange de diacides obtenus est distillé dans une distillation discontinue. Après élimination des premières fractions de tête comprenant des composés volatiles, on rassemble les premières fractions contenant de l'acide méthyl-glutarique et de l'acide éthyl succinique pour former un premier exemple utilisé pour la réalisation de l'exemple 1, le rassemblement des fractions intermédiaires est utilisé pour la réalisation de l'exemple 2 et les dernières fractions formant un troisième mélange contenant une proportion plus élevée en acide adipique utilisé pour la réalisation de l'exemple 3.

Un second lot de mélanges de diacides a été fabriqué selon le mode opératoire cidessus. Une partie du mélange obtenu après extraction du solvant MTBE a été distllée dans une distillation continue, la fraction distillée, après élimination des composés volatiles a été utilisée pour la réalisation de l'exemple 4 tandis que l'autre partie du mélange de diacides non distillée a été utilisée pour réaliser l'exemple 5.

La composition pondérale des différents mélanges de diacides décrits cidessus est indiquée dans le tableau 1 ci-dessous :

**Tableau 1**

| composants | Ex. 1 | Ex. 2 | Ex. 3 | Ex. 4 | Ex. 5 |
|---|---|---|---|---|---|
| Acide méthyl-glutarique % poids | 91,5 | 93 | 85 | 87,9 | 87,9 |
| Acide ethyl succinique % poids | 8,5 | 0 | 0 | 7,6 | 7,6 |
| Acide adipique % poids | 0 | 7 | 15 | 4,5 | 4,5 |

### Préparation du polyesterpolyol

Les mélanges de diacides définis ci-dessus dans le tableau sont estérifiés par addition d'un mélange de glycols MEG et DEG suivant un rapport molaire MEG/DEG de 60/40, le rapport molaire glycol/diacide étant de 1,30. Après estérification, la réaction de polymérisation est effectuée après ajout de 0,03 g/kg de catalyseur à l'étain, pendant environ 13 h à environ 200°C.

Les 5 polyesterpolyols obtenus ont les caractéristiques physico-chimiques rassemblés dans le tableau 2 ci-dessous :

**Tableau 2**

| Polyesterpolyol | Ex. 1 | Ex. 2 | Ex. 3 | Ex. 4 | Ex. 5 |
|---|---|---|---|---|---|
| Temps de réaction (h) | 13,3 | 14,9 | 15,1 | 19,4 | 15,2 |
| Rendement (g polyesterpolyol/g acide) | 1,43 | 1,40 | 1,42 | 1,33 | 1,34 |
| Indice hydroxyle (mg KOH/g) | 58,7 | 57,5 | 58,9 | 65,9 | 59,4 |
| Indice acide (mg KOH/g) | 0,60 | 1,0 | 0,58 | 0,15 | 0,47 |
| Teneur en eau (%) | 0,04 | 0,04 | 0,06 | 0,05 | 0,06 |
| Viscosité mPa.s à 35°C | 3540 | 3252 | 3306 | 2927 | 3384 |

### Préparation des mousses de polyuréthanne :

Les mousses de polyuréthanne sont obtenues à partir des 5 polyesterpolyols décrits ci-dessus dans le tableau 2 (exemples 1 à 5) et par mélange des produits listés dans le tableau 3 ci-dessous, par injection de ces produits dans une machine à injection et mis en forme dans un moule selon les conditions indiquées dans le tableau 4. Le rapport molaire NCO/OH est de 1,02 pour le polyol de l'exemple 1, de 1,00 pour le polyol de l'exemple 2, de 0,98 pour le polyol de l'exemple 3, de 0,99 pour le polyol de l'exemple 4 de 0,96 pour le polyol de l'exemple 5.

**Tableau 3**

| | Parties en poids | % en poids |
|---|---|---|
| Polyol | 100 | 88,73 |
| MEG | 10 | 8,87 |
| Eau | 0,8 | 0,71 |
| Dabco DC 1027* | 0,56 | 0,50 |
| Dabco EG* | 0,84 | 0,75 |
| Dabco DC 3043* | 0,3 | 0,27 |
| Dabco DC 3042* | 0,2 | 0,18 |
| Pré-polymère isocyanate commercialisé sous l'appelation | | |
| Elastopan SP 8020 par BASF | | |
| (% NCO = 20,8) | | |

| | | |
|---|---|---|
| * Produits commercialisés par la société Air Products & Chemicals | | |

**Tableau 4**

| | |
|---|---|
| Température du polyol | 40°C |
| Température pré-polymère isocyanate | 35°C |
| Rotation du mélangeur de tète (tpm) | 7700 |
| Température de moulage | 50°C |
| Densité du moulage | 0,45 g/cm³ |
| Temps de démoulage | 4 mn |

Les propriétés des mousses polyuréthannes obtenues sont déterminées selon les méthodes normalisées décrites précédemment sont rassemblées dans le tableau 5 ci-après : Les exemples 1, 4 et 5 sont des exemples comparatifs.

**Tableau 5**

| | Ex 1 | Ex 2 | Ex 3 | Ex 4 | Ex 5 |
|---|---|---|---|---|---|
| Résistance à la traction Kgf/cm² (DIN 53543) | 52,9 | 45,6 | 49,7 | 50,8 | 56,2 |
| Résistance à la traction Kgf/cm² (DIN 53543) après 7 jours à 70°C | 52,3±5,7 | 44,2±2,7 | 55,8±2,6 | | |
| Elongation Kgf/cm² (DIN 53543) | 297 | 326 | 291 | 289 | 310 |
| Résistance au déchirement Kgf/cm (ASTM D 3574-95) | 14,4 | 16,9 | 14,5 | 16,7 | 19,3 |
| Abrasion (DIN 53516 force 10N) | 380/353 | 310/336 | 280/302 | | |
| Abrasion (DIN 53516 force 5N) | 108±20 | 103±30 | 75±10 | 116±20 | 97±5 |
| DPC (ASTM D-395) (%) | 15-25 | 15-25 | 10-20 | 12-15 | 8-11 |
| Résilience (ASTM D1054) (%) | 22 | 26 | 25 | 13 | 12 |
| Teste de fatigue à la flexion (cycles) | >150 000 | >150 000 | >150 000 | | |
| Dureté initiale (DIN 53545) | 44±1 | 53±2 | 47±1 | | |
| Dureté après 7 jours à 70°C (DIN 53545) | 43±0 | 44±1,5 | 46±1 | 52±1,3 | 51,8±1 |

Le tableau 5 fait apparaitre que les 2 mousses polyuréthanne préparées à partir de polyesterpolyols conformément à l'invention (exemples 2 et 3 présentent un niveau de propriétés physiques élevées et comparables à celles des mousses polyuréthannes habituellement utilisées dans l'industrie notamment dans l'industrie de la chaussure.

## Revendications

1. Mousse polyuréthanne **caractérisée en ce qu'**elle est susceptible d'être obtenue par réaction :
a) d'un polyisocyanate et
b) d'un polyesterpolyol obtenu par polymérisation d'un mélange de monomères polyols et de monomères diacides, les dits monomères diacides étant constitués d'au moins un mélange M de diacides présentant une composition pondérale suivante :
| | |
|---|---|
| acide méthyl-glutarique (MGA): | 80-95 % |
| acide éthyl-succinique (ESA) : | 0-10 % |
| acide adipique (AA) : | 5-15 %. |

2. Mousse selon la revendication 1, **caractérisée en ce que** les diacides du mélange M sont partiellement ou en totalité sous forme anhydride.

3. Mousse selon la revendication 1 ou 2, **caractérisée en ce que** les monomères polyols sont choisis dans le groupe comprenant les diols, et les polyétherdiols.

4. Mousse selon l'une quelconque des revendications précédentes, **caractérisée en ce que** le mélange M de diacides est obtenu à partir d'un mélange N comprenant du méthyl-2-glutaronitrile (MGN), de l'éthyl-succinonitrile (ESN) et de l'adiponitrile (AdN), par réaction avec un composé basique hydroxyle en solution dans un solvant à une température comprise entre 80 et 200°C, élimination de l'ammoniac formé, et réaction du sel obtenu avec un acide minéral.

5. Mousse selon l'une quelconque des revendications 1 à 3, **caractérisée en ce que** le mélange M de diacides est préparé par :
a) hydratation d'un mélange N comprenant du méthyl-2-glutaronitrile (MGN), de l'éthyl-succinonitrile (ESN) et de l'adiponitrile (AdN), en fonction amide et
b) hydrolyse des fonctions amides en fonctions carboxyliques.

6. Mousse selon la revendication 5, **caractérisée en ce que** l'étape d'hydratation est réalisée par réaction avec l'eau en présence d'un acide fort minéral, en utilisant de 1 à 1,5 mole d'eau par mole de fonction nitrile à hydrater en présence d'un acide fort minéral à une température permettant de maintenir le milieu réactionnel à l'état liquide.

7. Mousse selon la revendication 5 ou 6, **caractérisée en ce que** l'étape d'hydrolyse est réalisée, sous agitation, en utilisant de 1 à 10 mole d'eau par mole de fonction amide à hydrolyser une quantité d'acide fort minéral exprimée en proton et correspondant à au moins 1 mole de proton par mole d'amide à hydrolyser, la température du milieu réactionnel étant déterminée pour maintenir le milieu réactionnel à l'état liquide.

8. Mousse selon l'une des revendications 5 à 7, **caractérisée en ce que** les diacides carboxyliques formés sont récupérés par maintien du milieu réactionnel, sans agitation, à une température supérieure à la température de fusion des diacide et/ou des sels formés pour permettre la décantation du milieu réactionnel, la phase supérieure contenant les diacides étant séparée.

9. Mousse selon l'une des revendications 4 à 8, **caractérisée en ce que** le mélange N de composés dinitriles est un mélange issu du procédé de fabrication de l'adiponitrile par double hydrocyanation du butadiène.

10. Mousse selon l'une quelconque des revendications précédentes, **caractérisée en ce que** le diol est choisi dans le groupe comprenant l'éthylène glycol, le 1,4-butanediol, le 1,5-pentanediol, le 1,6-hexanediol, le 1,10-décanediol, le 2,2-diméthyl-1,3-propanediol, le 1,3-propanediol, et le Bisphenol.

11. Mousse selon l'une des revendications précédentes, **caractérisée en ce que** le polyétherdiol est choisi dans le groupe comprenant le diéthylène glycol, le dipropylène glycol et l'1,1,3-triméthyl-triéthylènediol.

12. Mousse selon l'une des revendications précédentes, **caractérisée en ce que** la mousse polyuréthanne contient une charge inorganique particulaire dispersée.

13. Mousse selon la revendication 12, **caractérisée en ce que** la charge inorganique particulaire dispersée présente des particules de taille inférieure à 60 µm.

14. Mousse selon la revendication 13, **caractérisée en ce que** la charge inorganique particulaire dispersée présente des particules de taille inférieure 20 µm.

15. Mousse selon la revendication 14, **caractérisée en ce que** la charge inorganique particulaire dispersée présente des particules de taille inférieure à 10 µm.

16. Mousse selon l'une quelconque des revendications 12 à 15, **caractérisée en ce que** la charge inorganique particulaire dispersée est choisie parmi les poudres d'aluminosilicate, de silice notamment obtenue par précipitation, d'oxyde de titane, de talc, de kaolin et de carbonate de calcium.

## Patentansprüche

1. Polyurethanschaumstoff, **dadurch gekennzeichnet, dass** er sich durch die Reaktion:
a) eines Polyisocyanats und
b) eines Polyesterpolyols gewinnen lässt, das durch Polymerisation einer Mischung aus Polyolmonomeren und Disäuremonomeren gewonnen wird, wobei die Disäuremonomere aus mindestens einer Mischung M aus Disäuren gebildet sind, die folgende Gewichtszusammensetzung aufweist:
Methylglutarsäure (MGS): 80-95 %
Ethylbernsteinsäure (EBS): 0-10 %
Adipinsäure (AS): 5-15 %.

2. Schaumstoff nach Anspruch 1, **dadurch gekennzeichnet, dass** die Disäuren der Mischung M teilweise oder vollständig in Form von Anhydriden vorliegen.

3. Schaumstoff nach Anspruch 1 oder 2, **dadurch gekennzeichnet, dass** die Polyolmonomere aus der Gruppe umfassend Diole und Polyetherdiole ausgewählt sind.

4. Schaumstoff nach einem der vorhergehenden Ansprüche, **dadurch gekennzeichnet, dass** die Mischung M aus Disäuren aus einer Mischung N erhalten wird, die Methyl-2-glutaronitril (MGN), Ethyl-Bernsteinsäuredinitril (EBN) und Adiponitril (AdN) umfasst, durch Reaktion mit einer basischen Hydroxylverbindung in Lösung in einem Lösungsmittel bei einer Temperatur zwischen 80 und 200°C, Entfernung des entstandenen Ammoniaks und Reaktion des gewonnenen Salzes mit einer Mineralsäure.

5. Schaumstoff nach einem der Ansprüche 1 bis 3, **dadurch gekennzeichnet, dass** die Mischung M aus Disäuren hergestellt ist durch:
a) Hydratation einer Mischung N, die Methyl-2-glutaronitril (MGN), Ethyl-Bernsteinsäuredinitril (EBN) und Adiponitril (AdN) umfasst, zu Amidgruppen und
b) Hydrolyse der Amidgruppen zu Carbonsäuregruppen.

6. Schaumstoff nach Anspruch 5, **dadurch gekennzeichnet, dass** der Schritt der Hydratation durch Reaktion mit Wasser in Gegenwart einer starken Mineralsäure unter Verwendung von 1 bis 1,5 mol Wasser pro Mol zu hydratisierender Nitrilgruppe in Gegenwart einer starken Mineralsäure bei einer Temperatur durchgeführt wird, bei der sich das Reaktionsmedium im flüssigen Zustand halten lässt.

7. Schaumstoff nach Anspruch 5 oder 6, **dadurch gekennzeichnet, dass** der Schritt der Hydrolyse unter Rühren durchgeführt wird, unter Verwendung von 1 bis 10 mol Wasser pro Mol zu hydrolysierender Amidgruppe und einer Menge einer starken Mineralsäure, ausgedrückt in Protonen, die mindestens 1 mol Protonen pro Mol zu hydrolysierendem Amid entspricht, wobei die Temperatur des Reaktionsmediums so festgelegt ist, dass das Reaktionsmedium im flüssigen Zustand bleibt.

8. Schaumstoff nach einem der Ansprüche 5 bis 7, **dadurch gekennzeichnet, dass** die gebildeten Carbondisäuren erhalten werden durch Halten des Reaktionsmediums, ohne Rühren, bei einer Temperatur über der Schmelztemperatur der Disäuren und/oder der gebildeten Salze, damit das Absetzen des Reaktionsmediums ermöglicht wird, wobei die obere Phase die abgetrennten Disäuren enthält.

9. Schaumstoff nach einem der Ansprüche 4 bis 8, **dadurch gekennzeichnet, dass** die Mischung N aus Dinitrilverbindungen eine Mischung ist, die aus dem Verfahren zur Herstellung von Adiponitril durch zweifache Hydrocyanierung von Butadien stammt.

10. Schaumstoff nach einem der vorhergehenden Ansprüche, **dadurch gekennzeichnet, dass** das Diol aus der Gruppe ausgewählt ist, die Ethylenglycol, 1,4-Butandiol, 1,5-Pentandiol, 1,6-Hexandiol, 1,10-Decandiol, 2,2-Dimethyl-1,3-propandiol, 1,3-Propandiol und Bisphenol umfasst.

11. Schaumstoff nach einem der vorhergehenden Ansprüche, **dadurch gekennzeichnet, dass** das Polyetherdiol aus der Gruppe ausgewählt ist, die Diethylenglycol, Dipropylenglycol und 1,1,3-Trimethyltriethylendiol umfasst.

12. Schaumstoff nach einem der vorhergehenden Ansprüche, **dadurch gekennzeichnet, dass** der Polyurethanschaumstoff einen fein verteilten partikelförmigen anorganischen Füllstoff enthält.

13. Schaumstoff nach Anspruch 12, **dadurch gekennzeichnet, dass** der fein verteilte partikelförmige anorganische Füllstoff Partikel mit einer Größe von unter 60 µm aufweist.

14. Schaumstoff nach Anspruch 13, **dadurch gekennzeichnet, dass** der fein verteilte partikelförmige anorganische Füllstoff Partikel mit einer Größe von unter 20 µm aufweist.

15. Schaumstoff nach Anspruch 14, **dadurch gekennzeichnet, dass** der fein verteilte partikelförmige anorganische Füllstoff Partikel mit einer Größe von unter 10 µm aufweist.

16. Schaumstoff nach einem der Ansprüche 12 bis 15, **dadurch gekennzeichnet, dass** der fein verteilte partikelförmige anorganische Füllstoff aus Aluminosilikatpulver, insbesondere durch Ausfällung erhaltenem Siliziumdioxidpulver, aus Titanoxid-, Talkum-, Kaolin- und Kalziumcarbonatpulver ausgewählt ist.

## Claims

1. Polyurethane foam, **characterized in that** it is capable of being obtained by reaction:
a) of a polyisocyanate and
b) of a polyester polyol obtained by polymerization of a mixture of polyol monomers and diacid monomers, said diacid monomers being composed of at least one mixture M of diacids exhibiting a following composition by weight:
| | |
|---|---|
| methylglutaric acid (MGA): | 80-95% |
| ethylsuccinic acid (ESA): | 0-10% |
| adipic acid (AA): | 5-15%. |

2. Foam according to Claim 1, **characterized in that** the diacids of the mixture M are partially or completely in the anhydride form.

3. Foam according to Claim 1 or 2, **characterized in that** the polyol monomers are chosen from the group consisting of diols and polyether diols.

4. Foam according to any one of the preceding claims, **characterized in that** the mixture M of diacids is obtained from a mixture N comprising 2-methylglutaronitrile (MGN), ethylsuccinonitrile (ESN) and adiponitrile (AdN) by reaction with a basic hydroxyl compound in solution in a solvent at a temperature of between 80 and 200°C, removal of the ammonia formed and reaction of the salt obtained with an inorganic acid.

5. Foam according to any one of Claims 1 to 3, **characterized in that** the mixture M of diacids is prepared by:
a) hydrating a mixture N comprising 2-methylglutaronitrile (MGN), ethylsuccinonitrile (ESN) and adiponitrile (AdN) to give amide functional groups, and
b) hydrolyzing the amide functional groups to give carboxyl functional groups.

6. Foam according to Claim 5, **characterized in that** the hydration stage is carried out by reaction with water in the presence of a strong inorganic acid, by using from 1 to 1.5 mol of water per mole of nitrile functional group to be hydrated in the presence of a strong inorganic acid, at a temperature which makes it possible to maintain the reaction medium in the liquid state.

7. Foam according to Claim 5 or 6, **characterized in that** the hydrolysis stage is carried out, with stirring, by using from 1 to 10 mol of water per mole of amide functional group to be hydrolyzed and an amount of strong inorganic acid, expressed in protons, corresponding to at least 1 mol of proton per mole of amide to be hydrolyzed, the temperature of the reaction medium being determined in order to maintain the reaction medium in the liquid state.

8. Foam according to one of Claims 5 to 7, **characterized in that** the dicarboxylic acids formed are recovered by maintaining the reaction medium, without stirring, at a temperature greater than the melting point of the diacids and/or the salts formed in order to make possible the separation by settling of the reaction medium, the upper phase comprising the diacids being separated.

9. Foam according to one of Claims 4 to 8, **characterized in that** the mixture N of dinitrile compounds is a mixture resulting from the process for the manufacture of adiponitrile by double hydrocyanation of butadiene.

10. Foam according to any one of the preceding claims, **characterized in that** the diol is chosen from the group consisting of ethylene glycol, 1,4-butanediol, 1,5-pentanediol, 1,6-hexanediol, 1,10-decanediol, 2,2-dimethyl-1,3-propanediol, 1,3-propanediol and bisphenol.

11. Foam according to one of the preceding claims, **characterized in that** the polyether diol is chosen from the group consisting of diethylene glycol, dipropylene glycol and 1,1,3-trimethyltriethylenediol.

12. Foam according to one of the preceding claims, **characterized in that** the polyurethane foam comprises a dispersed particulate inorganic filler.

13. Foam according to Claim 12, **characterized in that** the dispersed particulate inorganic filler exhibits particles with a size of less than 60 µm.

14. Foam according to Claim 13, **characterized in that** the dispersed particulate inorganic filler exhibits particles with a size of less than 20 µm.

15. Foam according to Claim 14, **characterized in that** the dispersed particulate inorganic filler exhibits particles with a size of less than 10 µm.

16. Foam according to any one of Claims 12 to 15, **characterized in that** the dispersed particulate inorganic filler is chosen from powders formed of aluminosilicate, of silica, in particular obtained by precipitation, of titanium oxide, of talc, of kaolin and of calcium carbonate.
